# EUROPEAN PATENT SPECIFICATION

(11) **EP 3 961 080 B1**
(45) Date of publication and mention of the grant of the patent: **12.06.2024**
(21) Application number: 20794366.3
(22) Date of filing: 20.04.2020
(51) Int. Cl.: F16L 47/12, F16L 47/24, F16L 33/207

(54) **CONNECTION JOINT**
ANSCHLUSSVERBINDUNGSSTÜCK
JOINT DE RACCORDEMENT

(30) Priority: 24.04.2019 CN 201920574001 U
(43) Date of publication of application: 02.03.2022
(73) Proprietor: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528100 (CN); RiFeng New Material Co., Ltd., Foshan, Guangdong 528100 (CN)
(72) Inventor: CAO, Huijian, Foshan, Guangdong 528100 (CN); DIAO, Zhenbin, Foshan, Guangdong 528100 (CN); LIN, Xiyong, Foshan, Guangdong 528100 (CN); CHENG, Jiajia, Foshan, Guangdong 528100 (CN); CHEN, Shuohao, Foshan, Guangdong 528100 (CN)
(74) Representative: Meyer, Thorsten
(86) International application number: PCT/CN2020/085700
(87) International publication number: WO 2020/216189

(56) References cited:
- WO-A1-03/012328
- WO-A1-2018/071953
- CN-U- 202 521 090
- CN-U- 202 769 154
- CN-U- 202 791 110
- CN-U- 203 940 163
- CN-U- 204 254 125
- CN-U- 210 179 146
- CN-Y- 2 493 814
- DE-A1- 19 741 641
- KR-A- 20130 052 272
- US-A1- 2016 238 169

## Description

### TECHNICAL FIELD

The present disclosure relates to the technical field of tube connection, and in particular, relates to a connecting joint.

### BACKGROUND

In the prior art, a metal tube is usually welded with one end of a connecting joint for connection with a plastic tube. A plastic part detachably connected with the connecting joint is arranged on the other end of the connecting joint. The connecting joint is hermetically connected with the plastic tube through the plastic part. During actual connection, the plastic part is removed from the connecting joint, and then the metal tube is welded with one end of the connecting joint. After a welding area is cooled, the plastic part is installed on the other end of the connecting joint, and then the plastic tube is connected with the plastic part, so as to realize connection of the metal tube and the plastic tube. In such a connection mode, the installation between the connecting joint and the plastic tube is cumbersome and time-consuming, resulting in inconvenient construction.

Patent application WO2018/071953A1 disclosed a connector including: a hollow body having a first protrusion adjacent to a second protrusion; and a cover extending over at least a portion of the first protrusion, wherein a segment of the cover is restrained between the first protrusion and the second protrusion.

Patent application US2016/238169A1 disclosed a hose coupler generally includes a hose adapter including opposing ends, an interior surface forming a fluid passage between the opposed ends, and an exterior surface including a series of barbs for engaging an interior surface of a hose that is configured to be fluidly connected to the hose adapter. A ferrule is connected to the hose adapter and is positioned to at least partially surround the exterior surface of the hose adapter. The ferrule has an interior surface facing the exterior surface of the hose adapter. The interior surface defines at least one cutting rib having a sharp corner or edge for piercing an outer layer of the hose and a plurality of compression ribs each defining a rounded surface for compressing the hose against the barbs.

Patent application WO03/012328A1 disclosed a compression fitting (10) for plastic or multilayer tubes, said compression fitting being composed of a support collar (14) and a compression collar (16). Said support collar has at least one peripheral ring groove (24) extending on an outer surface (28). Said ring groove (24) contains a sealing element such as an O-ring. The compression collar (16) surrounding the support collar (14) is plastically deformable. In order to avoid damaging the sealing elements (26) when fitting the tube end (18) over the support collar (14), the sealing elements (26) are fully inserted inside the ring grooves (24).

Patent application DE19741641A1 disclosed that the pressing sleeve (3) is previously connected to the plastic connecting body (1) in which the connecting socket is integrated, by means of a bolt or catch connection. The end of the pressing sleeve is elastically deformable and has an annular inward-protruding holder fitment fitting into an annular holder-groove in the connecting body. The side of the groove next to the socket is defined by an annular collar.

### SUMMARY

The present disclosure provides a connecting joint, which can simplify the connection of the connecting joint and the tube, especially the plastic tube, and save installation time and is convenient to install.

To achieve the above objectives, the present disclosure provides a connecting joint, including a connecting tube and a first compression sleeve. The connecting tube includes a first tube connecting section for connecting a first tube and a second tube connecting section for connecting a second tube. The first tube connecting section and the second tube connecting section are communicated and an annular connecting plate is arranged therebetween. The first compression sleeve is sleeved on the second tube connecting section. A first insertion hole with an annular cross-section for the second tube to be inserted into is formed between an inner wall of the first compression sleeve and an outer wall of the second tube connecting section. A first annular groove is formed in an outer surface of one end of the second tube connecting section close to the annular connecting plate. An end portion of one end of the first compression sleeve close to the annular connecting plate is bent toward the second tube connecting section and inserted into the first annular groove. A bent section is arranged at an end of the first compression sleeve, and the bent section is inserted into the first annular groove through elastic deformation of the bent section when the bent section is nested in the second tube connecting section. An observation hole is formed in a surface of the end of the first compression sleeve close to the annular connecting plate. And the first tube connecting section is not arranged coaxially with the second tube connecting section and there is an angle between the first tube connecting section and the second tube connecting section there is a certain angle between the first tube connecting section and the second tube connecting section.

As a preferred solution, a first end face of the annular connecting plate close to the second tube connecting section may form at least a part of one side wall of the first annular groove, and the first compression sleeve may be adapted to abut against the first end face.

As a preferred solution, the first tube connecting section may be hermetically connected with the second tube connecting section through the annular connecting plate, and the first tube may be adapted to be nested in the first tube connecting section.

As a preferred solution, an inner diameter of the first tube connecting section may be greater than an inner diameter of the second tube connecting section. The first tube may be a metal tube, an end portion of the first tube extending into the first tube connecting section may abut against the annular connecting plate, and the first tube may be welded with the first tube connecting section. The second tube may be a plastic tube.

As a preferred solution, the first compression sleeve may be a metal part.

As a preferred solution, a chamfer may be formed in an outer surface of an end portion of one end of the first compression sleeve deviating from the annular connecting plate.

As a preferred solution, a convex tooth may be formed in an outer surface of the second tube connecting section.

As a preferred solution, an inner diameter of a middle part of the first compression sleeve may be less than an inner diameter of either end of the first compression sleeve.

As a preferred solution, a plurality of observation holes may be formed, and the plurality of observation holes may be in ring array arrangement in a circumferential direction of the first compression sleeve.

As a preferred solution, the first tube connecting section, the annular connecting plate and the second tube connecting section may be integrally formed.

As a preferred solution, the connecting joint may further include a second compression sleeve. The second compression sleeve may be sleeved on the first tube connecting section. A second insertion hole with an annular cross-section for the first tube to be inserted into may be formed between an inner wall of the second compression sleeve and an outer wall of the first tube connecting section. A second annular groove may be formed in an outer surface of one end of the first tube connecting section close to the annular connecting plate. An end portion of one end of the second compression sleeve close to the annular connecting plate may be bent toward the first tube connecting section and inserted into the second annular groove.

During actual installation through the connecting joint provided by the above technical solution, firstly, the first tube is installed with the first tube connecting section, and then the second tube is inserted into the first insertion hole with the annular cross-section formed between the first compression sleeve and the second tube connecting section. Then, the middle part of the first compression sleeve is deformed permanently toward the second tube by a compression tool and the inner wall of the first compression sleeve is pressed against the outer wall of the second tube, thereby realizing fixed connection of the first compression sleeve and the second tube. Since one end of the first compression sleeve is inserted into the first annular groove, the second tube connecting section, the second tube and the first compression sleeve are compressed with each other, thereby realizing relative fixed connection of the first compression sleeve and the second tube connecting section, and further realizing the connection of the first tube and the second tube. Compared with the prior art, such a connecting joint can simplify the connection of the connecting joint and the second tube, further simplify the connection of the first tube and the second tube, and save installation time and is convenient to install.

### BRIEF DESCRIPTION OF THE DRAWINGS

FIG. 1 is a schematic cross-sectional view of a connecting joint in a first embodiment of the present disclosure;
FIG. 2 is a schematic cross-sectional view of disassembly of the connecting joint in the first embodiment of the present disclosure;
FIG. 3 is a three-dimensional schematic diagram of disassembly of the connecting joint in the first embodiment of the present disclosure;
FIG. 4 is a cross-sectional view formed after a metal tube and a plastic tube are inserted into the connecting j oint respectively in the first embodiment of the present disclosure;
FIG. 5 is a cross-sectional view formed after connection of the metal tube and the plastic tube in the first embodiment of the present disclosure; and
FIG. 6 is a schematic cross-sectional view of a connecting joint in a second embodiment of the present disclosure.

In the drawings, 1 refers to a connecting tube; 11 refers to a second tube connecting section; 12 refers to a first tube connecting section; 13 refers to an annular connecting plate; 111 refers to a first annular groove; 112 refers to a chamfer; 113 refers to a convex tooth; 121 refers to a second annular groove; 131 refers to a first end face; 2 refers to a first compression sleeve; 21 refers to a bent section; 22 refers to an observation hole; 3 refers to a second tube or a plastic tube; 4 refers to a first tube or a metal tube; 5 refers to a compression tool; 6 refers to a first insertion hole; 7 refers to a second compression sleeve; and 8 refers to a second insertion hole.

### DETAILED DESCRIPTION

The specific implementations of the present disclosure are described in more detail below with reference to the accompanying drawings and embodiments. The following embodiments are intended to illustrate the present disclosure, rather than to limit the scope of the present disclosure.

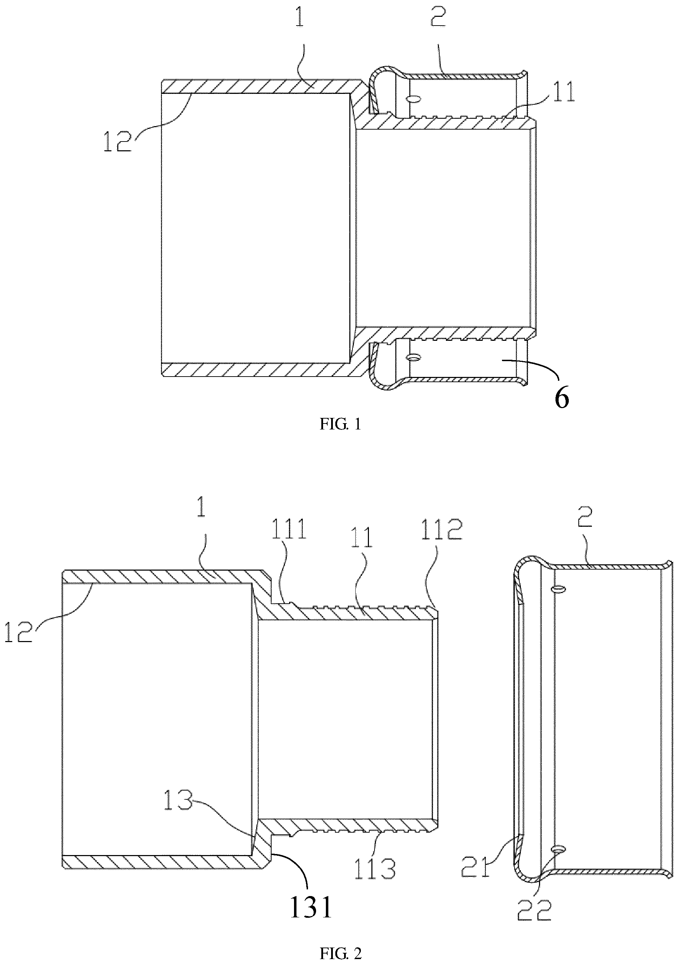

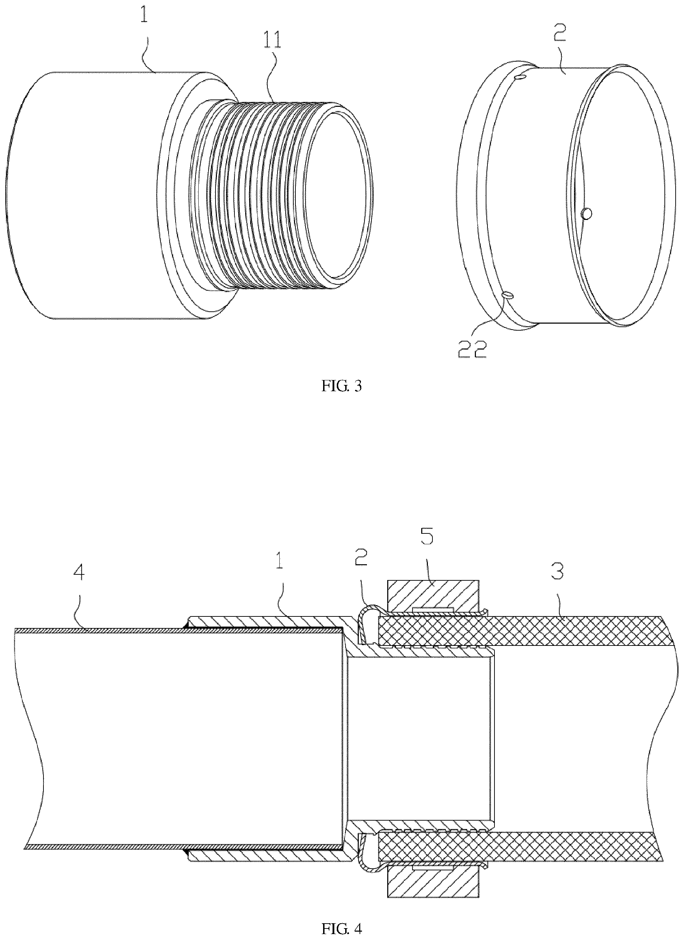

Referring to FIG. 1 to FIG. 5, a connecting joint for connecting a first tube 4 and a second tube 3 provided by a first embodiment of the present disclosure is shown. In the present embodiment, the first tube 4 is a metal tube 4, and the second tube 3 is a plastic tube 3 (not part of the claimed invention). The connecting joint includes a connecting tube 1 and a first compression sleeve 2. The connecting tube 1 includes a first tube connecting section 12 and a second tube connecting section 11 which are communicated. The first tube connecting section 12 is used to connect a metal tube 4, and the second tube connecting section 11 is used to connect a plastic tube 3. There may be a certain angle between the first tube connecting section 12 and the second tube connecting section 11.

An annular connecting plate 13 is arranged between the first tube connecting section 12 and the second tube connecting section 11. Preferably, an inner diameter of the first tube connecting section 12 is greater than an inner diameter of the second tube connecting section 11, the first tube connecting section 12 is hermetically connected with the second tube connecting section 11 through the annular connecting plate 13, and the metal tube 4 is adapted to be nested in the first tube connecting section 12. In other implementations, the inner diameter of the first tube connecting section 12 may be equal to or smaller than the inner diameter of the second tube connecting section 11.

The first compression sleeve 2 is sleeved on the second tube connecting section 11, and a first insertion hole 6 with an annular cross-section for the plastic tube 3 to be inserted into is formed between an inner wall of the first compression sleeve 2 and an outer wall of the second tube connecting section 11. A first annular groove 111 is formed in an outer surface of one end of the second tube connecting section 11 close to the annular connecting plate 13, and an end portion of one end of the first compression sleeve 2 close to the annular connecting plate 13 is bent toward the second tube connecting section 11 and inserted into the first annular groove 111. As shown in FIG. 2, a bent section 21 arranged at an end of the first compression sleeve 2 is inserted into the first annular groove 111. In the present embodiment, an outer diameter of the first tube connecting section 12 may be greater than an outer diameter of the second tube connecting section 11. In other embodiments, the outer diameter of the first tube connecting section 12 may also be set to be less than the outer diameter of the second tube connecting section 11, which is not limited.

During connection of the metal tube 4 and the plastic tube 3 by the connecting joint of the present embodiment, firstly, the metal tube 4 is inserted into the first tube connecting section 12, and the metal tube 4 extends into the end portion of the first tube connecting section 12 to abut against the end face of the annular connecting plate 13. Then, the metal tube 4 is welded with the first tube connecting section 12 through a high-temperature welding process. After a welding area is cooled, the plastic tube 3 is inserted into the first insertion hole with the annular cross-section formed between the first compression sleeve 2 and the second tube connecting section 11. Then the middle part of the first compression sleeve 2 is deformed permanently toward the plastic tube 3 by a compression tool 5 and the inner wall of the first compression sleeve 2 is pressed against the outer wall of the plastic tube 3, thereby realizing fixed connection of the first compression sleeve 2 and the plastic tube 3. The compression tool 5 may be a vise. Since one end of the first compression sleeve 2 is inserted into the first annular groove 111, the second tube connecting section 11, the plastic tube 3 and the first compression sleeve 2 are compressed with each other, thereby realizing relative fixed connection of the first compression sleeve 2 and the second tube connecting section 11, and further realizing the connection of the metal tube 4 and the plastic tube 3. Compared with the prior art, such a connecting joint can simplify the connection of the connecting joint and the plastic tube 3, further simplify the connection of the metal tube 4 and the plastic tube 3, and save installation time and is convenient to install.

As can be seen from the figures, the bent section 21 of the first compression sleeve 2 is inserted into the first annular groove 111, and the shape of the bent section 21 may be preformed. The bent section 21 is bent toward the inside of the first compression sleeve 2, forming a hook. In the process of being nested in the second tube connecting section 11, the bent section 21 is inserted into the first annular groove 111 through its own elastic deformation. After the bent section 21 is inserted in place, the shape recovers, so that the first compression sleeve 2 is installed on the second tube connecting section 11 and is not easy to fall off. The first compression sleeve 2 is preferably a metal part which can withstand high temperatures, so that during welding operation of the metal tube 4 and the first tube connecting section 12, it is not necessary to deliberately remove the first compression sleeve 2 from the second tube connecting section 11.

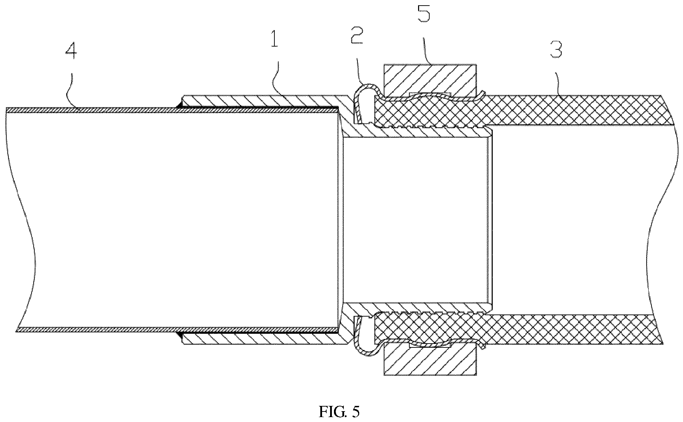

As can be seen from FIG. 5, a first end face 131 of the annular connecting plate 13 close to the second tube connecting section 11 forms at least a part of one side wall of the first annular groove 111, which facilitates the formation of the first annular groove 111. In addition, when the plastic tube 3 needs to be connected, the bent section 21 of the first compression sleeve 2 may abut against the first end face 131 of the annular connecting plate 13, thereby facilitating reliable positioning of the first compression sleeve 2.

Further, a chamfer 112 is formed in an outer surface of an end portion of one end of the first compression sleeve 2 deviating from the annular connecting plate 13. In such arrangement, the second tube connecting section 11 may be easily inserted into the inside of the plastic tube 3, and the plastic tube 3 may be easily inserted into the first insertion hole with the annular cross-section formed between the first compression sleeve 2 and the second tube connecting section 11.

Further, a convex tooth 113 or a plurality of convex teeth 113 uniformly arranged is/are formed in an outer surface of the second tube connecting section 11. In this way, after the first compression sleeve 2 is compressed, the plastic tube 3 is in concave and convex fit with the convex tooth 113, which can enhance the resistance of plastic tube 3 to be pulled out from the second tube connecting section 11 to ensure the stability of the connection.

Further, an inner diameter of a middle part of the first compression sleeve 2 is less than an inner diameter of either end of the first compression sleeve, thereby facilitating the compression of the first compression sleeve 2 toward the plastic tube 3. An observation hole 22 is formed in a surface of the end of the first compression sleeve 2 close to the annular connecting plate 13. Preferably, 2, 3 or a plurality of observation holes 22 are formed, and the plurality of observation holes 22 are in ring array arrangement in a circumferential direction of the first compression sleeve 2. In such arrangement, it is easy to observe whether the plastic tube 3 is inserted in place. In addition, in the present embodiment, the first tube connecting section 12, the annular connecting plate 13 and the second tube connecting section 11 are integrally formed.

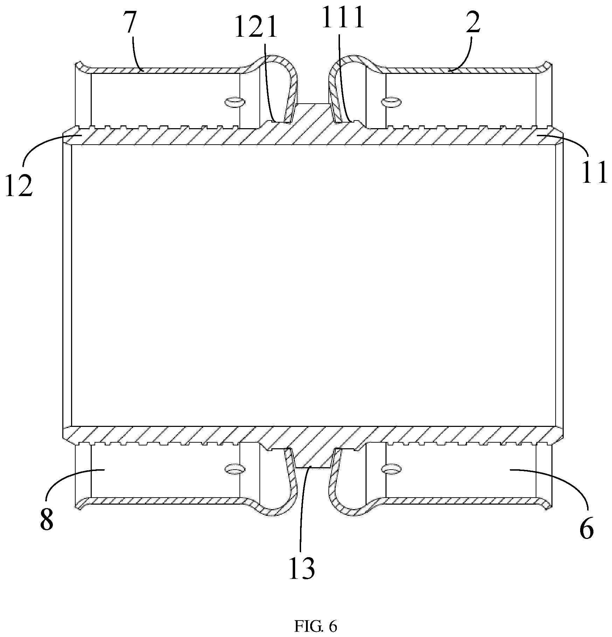

The present disclosure further provides a second embodiment which is not shown. The connecting joint is used to connect the first tube 4 and the second tube 3. Preferably, the structures of the first tube connecting section 12 and the second tube connecting section 11 are symmetrical with respect to the annular connecting plate 13 (as shown in Fig. 6). In other embodiments, the structures of the first tube connecting section 12 and the second tube connecting section 11 may not be symmetrical with respect to the annular connecting plate 13. A second compression sleeve is further sleeved on the first tube connecting section 12, and the second compression sleeve 7 is preferably a metal part.

Specifically, as shown in Fig. 6, the second compression sleeve 7 is sleeved on the first tube connecting section 12, a second insertion hole 8 with an annular cross-section for the first tube 4 to be inserted into is formed between an inner wall of the second compression sleeve 7 and an outer wall of the first tube connecting section 12, a second annular groove 121 is formed in an outer surface of one end of the first tube connecting section 12 close to the annular connecting plate 13, and an end portion of one end of the second compression sleeve 7 close to the annular connecting plate 13 is bent toward the first tube connecting section 12 and inserted into the second annular groove 121. In the present embodiment, the operation of installing the first tube 4 in the first tube connecting section 12 is the same as that of installing the second tube 3 in the second tube connecting section 11 in the first embodiment, which is not repeated here.

Preferably, a second end face of the annular connecting plate 13 close to the first tube connecting section 12 forms at least a part of one side wall of the second annular groove 121, which facilitates the formation of the second annular groove 121. In addition, when the first tube 4 needs to be connected, a bent section of the second compression sleeve 7 may abut against a second end face of the annular connecting plate 13, thereby facilitating reliable positioning of the second compression sleeve 7. Preferably, the structures of the second compression sleeve 7 and the first compression sleeve 2 are roughly symmetrical with respect to the annular connecting plate 13. In other embodiments, the structures of the second compression sleeve 7 and the first compression sleeve 2 may not be symmetrical with respect to the annular connecting plate 13.

It should be noted that in the description of the present disclosure, the terms such as "center", "longitudinal", "transverse", "upper", "lower", "front", "rear", "left", "right", "vertical", "horizontal", "top", "bottom", "inside" and "outside" indicate the orientation or position relationships based on the drawings. These terms are merely intended to facilitate description of the present disclosure and simplify the description, rather than to indicate or imply that the mentioned device or element must have a specific orientation and must be constructed and operated in a specific orientation. Therefore, these terms should not be construed as a limitation to the present disclosure. Moreover, the terms such as "first", "second", and "third" are used only for the purpose of description and are not intended to indicate or imply relative importance.

In the description of the present disclosure, it should be noted that, unless otherwise clearly specified, meanings of terms "install", "connected with", and "connected to" should be understood in a broad sense. For example, the connection may be a fixed connection, a removable connection, or an integral connection; may be a mechanical connection or an electrical connection; may be a direct connection or an indirect connection by an intermediate medium; or may be intercommunication between two components. Persons of ordinary skill in the art may understand specific meanings of the foregoing terms in the present disclosure based on a specific situation.

## Claims

1. A connecting joint, comprising a connecting tube (1) and a first compression sleeve (2), wherein the connecting tube (1) comprises a first tube connecting section (12) for connecting a first tube (4) and a second tube connecting section (11) for connecting a second tube (3) wherein the first tube connecting section (12) and the second tube connecting section (11) are communicated and an annular connecting plate (13) is arranged therebetween, the first compression sleeve (2) is sleeved on the second tube connecting section (11), a first insertion hole (6) with an annular cross-section for the second tube (3) to be inserted into is formed between an inner wall of the first compression sleeve (2) and an outer wall of the second tube connecting section (11), a first annular groove (111) is formed in an outer surface of one end of the second tube connecting section (11) close to the annular connecting plate (13), and an end portion of one end of the first compression sleeve (2) close to the annular connecting plate (13) is bent toward the second tube connecting section (11) and inserted into the first annular groove (111);
wherein a bent section (21) is arranged at an end of the first compression sleeve, and in a process of being nested in the second tube connecting section (11), the bent section (21) is inserted into the first annular groove (111) through its own elastic deformation;
wherein an observation hole (22) is formed in a surface of the end of the first compression sleeve (2) close to the annular connecting plate (13); and
the first tube connecting section (12) is not arranged coaxially with the second tube connecting section (11) and there is an angle between the first tube connecting section (12) and the second tube connecting section (11).

2. The connecting joint according to claim 1, wherein a first end face (131) of the annular connecting plate (13) close to the second tube connecting section (11) forms at least a part of one side wall of the first annular groove (111), and the first compression sleeve (2) is adapted to abut against the first end face (131).

3. The connecting joint according to claim 1, wherein the first tube connecting section (12) is hermetically connected with the second tube connecting section (11) through the annular connecting plate (13), and the first tube (4) is adapted to be nested in the first tube connecting section (12).

4. The connecting joint according to claim 1, wherein
an inner diameter of the first tube connecting section (12) is greater than an inner diameter of the second tube connecting section (11);
the first tube (4) is a metal tube, an end portion of the first tube (4) extending into the first tube connecting section (12) abuts against the annular connecting plate (13), and the first tube (4) is welded with the first tube connecting section (12); and
the second tube (3) is a plastic tube.

5. The connecting joint according to claim 1, wherein the first compression sleeve (2) is a metal part.

6. The connecting joint according to any one of claims 1 to 5, wherein a chamfer (112) is formed in an outer surface of an end portion of one end of the first compression sleeve (2) deviating from the annular connecting plate (13).

7. The connecting joint according to any one of claims 1 to 5, wherein a convex tooth (113) is formed in an outer surface of the second tube connecting section (11).

8. The connecting joint according to any one of claims 1 to 5, wherein an inner diameter of a middle part of the first compression sleeve (2) is less than an inner diameter of either end of the first compression sleeve (2).

9. The connecting joint according to claim 1, wherein a plurality of observation holes (22) are formed, and the plurality of observation holes (22) are in ring array arrangement in a circumferential direction of the first compression sleeve (2).

10. The connecting joint according to any one of claims 1 to 5, wherein the first tube connecting section (12), the annular connecting plate (13) and the second tube connecting section (11) are integrally formed.

11. The connecting joint according to claim 1, further comprising a second compression sleeve (7), the second compression sleeve (7) is sleeved on the first tube connecting section (12), a second insertion hole (8) with an annular cross-section for the first tube (4) to be inserted into is formed between an inner wall of the second compression sleeve (7) and an outer wall of the first tube connecting section (12), a second annular groove (121) is formed in an outer surface of one end of the first tube connecting section (12) close to the annular connecting plate (13), and an end portion of one end of the second compression sleeve (7) close to the annular connecting plate (13) is bent toward the first tube connecting section (12) and inserted into the second annular groove (121).

## Patentansprüche

1. Anschlussverbindungsstück, umfassend ein Verbindungsrohr (1) und eine erste Presshülse (2), wobei das Verbindungsrohr (1) einen ersten Rohrverbindungsabschnitt (12) zum Verbinden eines ersten Rohrs (4) und einen zweiten Rohrverbindungsabschnitt (11) zum Anschluss eines zweiten Rohres (3) umfasst, wobei der erste Rohrverbindungsabschnitt (12) und der zweite Rohrverbindungsabschnitt (11) kommunizieren und dazwischen eine ringförmige Verbindungsplatte (13) angeordnet ist, wobei die erste Presshülse (2) auf den zweiten Rohrverbindungsabschnitt (11) aufgesteckt ist,
ein erstes Einsteckloch (6) mit ringförmigem Querschnitt zum Einführen des zweiten Rohres (3) ist gebildet zwischen einer Innenwand der ersten Presshülse (2) und einer Außenwandung des zweiten Rohrverbindungsabschnitts (11),
eine erste Ringnut (111) ist in einer Außenfläche eines Endes des zweiten Rohrverbindungsabschnitts (11) nahe der ringförmigen Verbindungsplatte (13) gebildet,
und ein Endabschnitt eines Endes der ersten Presshülse (2) nahe der ringförmigen Verbindungsplatte (13) ist hin gebogen zum zweiten Rohrverbindungsabschnitt (11) und in die erste Ringnut (111) eingesetzt;
wobei ein gebogener Abschnitt (21) am Ende der ersten Kompressionshülse (2) angeordnet ist und der gebogene Abschnitt (21) durch elastische Verformung des gebogenen Abschnitts (21) in die erste Ringnut (111) eingeführt wird, wenn der gebogene Abschnitt (21) in dem zweiten Verbindungsabschnitt des Rohres (11) verschachtelt ist; und
wobei ein Beobachtungsloch (22) in einer Oberfläche des Endes der ersten Kompressionshülse (2) in der Nähe der ringförmigen Verbindungsplatte (13) ausgebildet ist;
und der erste Rohrverbindungsabschnitt (12) nicht koaxial mit dem zweiten Rohrverbindungsabschnitt (11) angeordnet ist und ein Winkel zwischen dem ersten Rohrverbindungsabschnitt (12) und dem zweiten Rohrverbindungsabschnitt (11) besteht.

2. Anschlussverbindungsstück nach Anspruch 1, wobei eine erste Stirnfläche (131) der ringförmigen Verbindungsplatte (13) nahe dem zweiten Rohrverbindungsabschnitt (11) zumindest einen Teil einer Seitenwand der ersten Ringnut (111) bildet, und die erste Presshülse (2) zur Anlage an der ersten Stirnfläche (131) ausgebildet ist.

3. Anschlussverbindungsstück nach Anspruch 1, wobei der erste Rohrverbindungsabschnitt (12) durch die ringförmige Verbindungsplatte (13) hermetisch mit dem zweiten Rohrverbindungsabschnitt (11) verbunden ist, und das erste Rohr (4) ineinander steckbar in den ersten Rohrverbindungsabschnitt (12) ausgestaltet ist.

4. Anschlussverbindungsstück nach Anspruch 1, wobei
ein Innendurchmesser des ersten Rohrverbindungsabschnitts (12) größer ist als ein Innendurchmesser des zweiten Rohrverbindungsabschnitts (11);
das erste Rohr (4) ein Metallrohr ist, ein in den ersten Rohrverbindungsabschnitt (12) hineinreichender Endabschnitt des ersten Rohrs (4) an der ringförmigen Verbindungsplatte (13) anliegt, und das erste Rohr (4) verschweißt ist mit dem ersten Rohrverbindungsabschnitt (12);
und das zweite Rohr (3) ein Kunststoffrohr ist.

5. Anschlussverbindungsstück nach Anspruch 1, wobei die erste Presshülse (2) ein Metallteil ist.

6. Anschlussverbindungsstück nach einem der Ansprüche 1 bis 5, wobei in einer Außenfläche eines von der ringförmigen Verbindungsplatte (13) abweichenden Endabschnitts eines Endes der ersten Presshülse (2) eine Fase (112) ausgebildet ist.

7. Anschlussverbindungsstück nach einem der Ansprüche 1 bis 5, wobei in einer Außenfläche des zweiten Rohrverbindungsabschnitts (11) ein konvexer Zahn (113) ausgebildet ist.

8. Anschlussverbindungsstück nach einem der Ansprüche 1 bis 5, wobei ein Innendurchmesser eines mittleren Teils der ersten Kompressionshülse (2) kleiner ist als ein Innendurchmesser an beiden Enden der ersten Kompressionshülse (2).

9. Anschlussverbindungsstück nach Anspruch 1, wobei mehrere Beobachtungslöcher (22) ausgebildet sind, und die mehreren Beobachtungslöcher (22) in einer Ringanordnung in einer Umfangsrichtung der ersten Kompressionshülse (2) angeordnet sind.

10. Anschlussverbindungsstück nach einem der Ansprüche 1 bis 5, wobei der erste Rohrverbindungsabschnitt (12), die ringförmige Verbindungsplatte (13) und der zweite Rohrverbindungsabschnitt (11) einteilig ausgebildet sind.

11. Anschlussverbindungsstück nach Anspruch 1, weiterhin umfassend eine zweite Kompressionshülse (7), wobei die zweite Kompressionshülse (7) auf den ersten Rohrverbindungsabschnitt (12) aufgesteckt ist, ein zweites Einsteckloch (8) mit einem ringförmigen Querschnitt zum Einfügen in für das erste Rohr (4) ist gebildet zwischen einer Innenwand der zweiten Kompressionshülse (7) und einer Außenwand des ersten Rohrverbindungsabschnitts (12), eine zweite Ringnut (121) ist in einer Außenfläche eines Endes des ersten Rohrverbindungsabschnitts (12) nahe an der ringförmigen Verbindungsplatte (13) ausgebildet, und ein Endabschnitt eines Endes der zweiten Kompressionshülse (7) nahe der ringförmigen Verbindungsplatte (13) zum ersten Rohrverbindungsabschnitt (12) hin gebogen ist und in die zweite Ringnut (121) eingesetzt.

## Revendications

1. Joint de raccordement, composé d'un tube de raccordement (1) et d'un premier manchon de compression (2), dans lequel le tube de raccordement (1) comprend une première section de raccordement de tube (12) pour le raccordement d'un premier tube (4) et une deuxième section de raccordement de tube (11) pour le raccordement d'un deuxième tube (3), que la première section de raccordement de tube (12) et la deuxième section de raccordement de tube (11) sont communiquées et qu'une plaque de raccordement annulaire (13) est disposée entre celles-ci, le premier manchon de compression (2) est manchon sur la deuxième section de connexion du tube (11), un premier trou d'insertion (6) avec une section transversale annulaire pour le deuxième tube (3) à insérer est formé entre une paroi intérieure du premier manchon de compression (2) et une paroi extérieure de la deuxième section de raccordement du tube (11), une première rainure annulaire (111) est formée dans une surface extérieure d'une extrémité de la deuxième section de raccordement du tube ( 11) près de la plaque de raccordement annulaire (13), et une partie d'extrémité d'une extrémité du premier manchon de compression (2) près de la plaque de raccordement annulaire (13) est pliée vers la deuxième section de connexion du tube (11) et insérée dans la première rainure annulaire (111) ;
dans lequel une section pliée (21) est disposée à l'extrémité du premier manchon de compression et, dans un processus d'imbrication dans la deuxième section de connexion du tube (11), la section pliée (21) est insérée dans la première rainure annulaire (111) par sa propre déformation élastique ;
dans lequel un trou d'observation (22) est formé dans une surface de l'extrémité du premier manchon de compression (2) près de la plaque de connexion annulaire (13) ; et la première section de connexion du tube (12) n'est pas disposée de manière coaxiale avec la deuxième section de connexion du tube (11) et il y a un angle entre la première section de connexion du tube (12) et la deuxième section de connexion du tube (11).

2. Joint de raccordement selon la revendication 1, dans lequel une première face d'extrémité (131) de la plaque de connexion annulaire (13) proche de la deuxième section de raccordement de tube (11) forme au moins une partie d'une paroi latérale de la première rainure annulaire (111), et le premier manchon de compression (2) est adapté pour buter contre la première face d'extrémité (131).

3. Joint de raccordement selon la revendication 1, dans lequel la première section de raccordement de tube (12) est hermétiquement reliée à la deuxième section de raccordement de tube (11) par l'intermédiaire de la plaque de connexion annulaire (13), et le premier tube (4) est adapté pour être imbriqué dans la première section de raccordement de tube (12).

4. Joint de raccordement selon la revendication 1, dans lequel un diamètre intérieur de la première section de raccordement du tube (12) est supérieur au diamètre intérieur de la deuxième section de raccordement du tube (11) ;
le premier tube (4) est un tube métallique, une partie d'extrémité du premier tube (4) s'étendant dans la première section de connexion du tube (12) bute contre la plaque de connexion annulaire (13), et le premier tube (4) est soudé avec la première section de connexion du tube (12) ; et
le deuxième tube (3) est un tube en plastique.

5. Joint de raccordement selon la revendication 1, dans lequel le premier manchon de compression (2) est une pièce métallique.

6. Joint de raccordement selon l'une quelconque des revendications 1 à 5, dans lequel un chanfrein (112) est formé dans une surface extérieure d'une partie d'extrémité d'une extrémité du premier manchon de compression (2) s'écartant de la plaque de raccordement annulaire (13).

7. Joint de raccordement selon l'une quelconque des revendications 1 à 5, dans lequel une dent convexe (113) est formée dans une surface extérieure de la deuxième section de raccordement du tube (11).

8. Joint de raccordement selon l'une quelconque des revendications 1 à 5, dans lequel un diamètre intérieur d'une partie centrale du premier manchon de compression (2) est inférieur à un diamètre intérieur de l'une ou l'autre extrémité du premier manchon de compression (2).

9. Joint de raccordement selon la revendication 1, dans lequel une pluralité de trous d'observation (22) sont formés, et la pluralité de trous d'observation (22) sont disposés en réseau d'anneaux dans une direction circonférentielle du premier manchon de compression (2).

10. Joint de raccordement selon l'une quelconque des revendications 1 à 5, dans lequel la première section de raccordement de tube (12), la plaque de connexion annulaire (13) et la deuxième section de raccordement de tube (11) sont intégralement formées.

11. Joint de raccordement selon la revendication 1, comprenant en outre un deuxième manchon de compression (7), le deuxième manchon de compression (7) est manchonné sur la première section de raccordement du tube (12), un deuxième trou d'insertion (8) avec une section transversale annulaire pour le premier tube (4) à insérer est formé entre une paroi intérieure du deuxième manchon de compression (7) et une paroi extérieure de la première section de raccordement du tube (12), Une deuxième rainure annulaire (121) est formée dans une surface extérieure d'une extrémité de la première section de connexion du tube (12) près de la plaque de connexion annulaire (13), et une partie d'extrémité d'une extrémité du deuxième manchon de compression (7) près de la plaque de connexion annulaire (13) est pliée vers la première section de connexion du tube (12) et insérée dans la deuxième rainure annulaire (121).
